# EUROPEAN PATENT APPLICATION

(11) **EP 1 605 380 A1**
(43) Date of publication of application: **14.12.2005**
(21) Application number: 03815697.2
(22) Date of filing: 03.02.2003
(51) Int. Cl.: G06F 17/60

(54) **SERVICE AND APPLICATION INTEGRATION SYSTEM**

(71) Applicant: Poweroffice, S.A., 08005 Barcelona (ES)
(72) Inventor: DOMENECH RIERA, Eudald, E-08005 Barcelona (ES)
(74) Representative: Gallego Jiménez, José Fernando
(86) International application number: PCT/ES2003/000060
(87) International publication number: WO 2004/070638

(57) **Abstract**

It comprises a central unit (1) remotely connected to a client device (9) whereon a user interacts.

It is **characterized in that** it comprises a client unit (6) remotely connected to the central unit (1) and connected to the client device (10), whose client unit (6) comprises data storage means which store applications to be run on the client device (9; 13), on interacting with a human-machine interface associated to a client application which is run on the client device (9).

A system that does not depend on factors external to the system such as an Internet connection, for its correct functioning, is achieved. The client processing and control unit is arranged locally in the client devices forming part of the computer network for which reason the connection between said client and said client devices is much quicker and more secure.

## Description

The present invention relates to a system for the integration of applications and services comprisisng at least one central processing and control unit remotely connected to at least one client device whereon at least one validated user interacts in the system through the client device.

### Background of the invention

Since the Internet infrastructure markets have evolved considerably, a new computer system model has appeared which is based on the presence of *Application Service Providers,* also known as ASP, understanding an application service as the enabling of software in Internet, so that it can be used in computers, e.g. of a company, without the need to install it therein. The access to said applications by the users is made through a *browser*.

All the information, whether regarding applications, the services, or that generated by the users, is stored in a Data Center or central server which has security measures adapted to the requirements, to be delivered to the client on a public or private network. Said service can be complemented with other additional services such as infrastructure administration, the handling of backups and recovery, or process execution.

The ASP service is billed for monthly lease, and its price is generally determined by the number of user licenses required for the client company, the functionality leased and the amount of regular transactions performed.

The appearance of *ASPs* has meant an increase in the efficiency, performance and security of the specialized applications, in addition to a reduction in costs at all levels.

Thus, the most important characteristics provided by *ASPs* are:
- They have and operate software;
- They have their own Hosting services where the applications are run
- They have continuous application maintenance;
- They place the applications at the client's disposal through Internet, in a browser; and
- They charge for the use of application per use and based on monthly or annual charges.

Therefore, and due to the important, significant advantages over the traditional existing models, the ASP model has achieved said evolution. Amongst said advantages, the following should be highlighted:
- The greatest advantage, especially for small and middle-sized companies, as well as newly created companies, is the low starting cost and an extremely short set-up time.
- Said model eliminates the specialized infrastructure for the main application.
- The pay on demand model is usually less expensive.
- Reduction in the high specialized software costs, meaning that a small company can use said software.
- Reduction in the complexity of the software and of the updates thereof, especially if they are large applications.

Despite all the advantages described up to this point, current *ASPs* also have a series of serious drawbacks which are described below.

Firstly, the client computers of the client companies and the *ASPs*' central server are on Internet, which means the good functioning of the system will depend on the good functioning of Internet and of the connections to Internet, both of *ASPs* and of their client companies. Furthermore, it is difficult to attain speeds of magnitudes similar to that of a Local area network or *LAN* in the connection of the central server to the client company's computers through Internet, especially at a reduced cost, which is one of the advantages that an *ASP* should provide.

Secondly, a possible Internet failure, both regarding networks and connections to Internet of *ASPs* or of the client companies, means a halt in the computer system of said companies, with the consequent financial and time losses.

Furthermore, the human-machine communication interface used by *ASPs* is generally based on a *http* server found in the ASPs' central server, which sends pages in *html* to the users of the client companies, so that they interact with them through the Web browser installed in their computers. The use of said pages in *html* considerably reduces system functionality, and also reduces the design possibilities of the human-machine interfaces, whose design is fundamental to facilitating and improving the users' work.

Furthermore, the simple use of Internet in computer systems implies a series of serious security problems, especially as regards user validation which, until the present time, have been impossible to avoid, even though very expensive security systems are used.

Another drawback relates to the backup system, since the copies of all the information generated in the computer systems are, in some cases, solely in the power of the *ASPs*, for which reason any problem in the *ASPs* can cause serious data loss, which give rise to financial and documentary losses, often irreparable.

One of the greatest problems as regards information storage of said disclosed systems is the fact that a large quantity of information is maintained in different servers, maintaining the reliability and performance, against the installation in a single server.

Formerly, and even in many current installations, one of the solutions adopted is based on the replication of information in several servers, achieving that several systems perform tasks on the same documentary contents.

Another of the typical modalities in large computer systems is the user of parallel servers with databases. Said modality notably increases system performance, but is limited due to the high price of the new hardware devices necessary to connect the servers. Furthermore, they do not support distributed capacities, being restricted to large databases wherein the information is found in a single processing centre.

### Description of the invention

The present invention solves all said drawbacks, further providing the new technical characteristics described below.

According to a first aspect of the invention, the system for the integration of applications and services is characterized in that it comprises at least one client processing and control unit arranged between the central processing and control unit and the client device, being connected remotely to the central processing and control unit and being connected to the client device through connection means, whose client processing and control unit comprises data storage means which store applications and services to be run on the client device by the user, on interacting with a human-machine interface associated to a first client application that is run on the client device, viewed by the user in the client device after the validation of the user in the system.

In this way, a system is achieved for the integration of applications and services which does not depend on factors external to the system, such as an Internet connection, to correctly function. The client processing and control unit is arranged locally with the client devices forming part of the computer network of, e.g. a client company, for which reason the connection between said client processing and control unit and said client devices is much quicker and more secure. This means the applications and services run much faster than on the systems for the integration of applications and services known up to the present time.

If the central processing and control unit forms part of the application service provider, the remote validation of the users on said central processing and control unit permits said provider to control user access to the system and the tasks that said users perform in said system, to subsequently generate an bill for the use of the applications and services to the client company.

Furthermore, one of the most important characteristics of the system is the capacity to constantly receive information from the elements that form it. Said information, whether documentary, regarding configuration, etc., is stored locally in each system element, which also means a considerable increase in security against information loss or the crashing of any of said system elements, the system being able to continue functioning.

On the other hand, since the central processing and control unit receives all the information generated in the system, it permits it to detect faults in the applications, including undue or unauthorized use of any part of the system, considerably increasing system security, without the client company having to perform any type of intervention.

This all means a drastic reduction in the IT expenses of the client company, since the control of the correct functioning of the system, as well as the correction of a possible malfunction, is performed remotely from the central processing and control unit of the application service provider.

It should be highlighted that the central processing and control unit, the client processing and control unit and the client device are computers.

It can therefore be deduced that the system for the integration of applications and services, object of the invention, permits integrating, in a single system and for a single charge, all the applications and services that a client company may need. This means a saving, an increase in security in the computer system, and an increase in productivity of the client company.

The saving is based on the fact that all the applications and services are billed, for example, monthly. Furthermore, the configuration can be modified at any time by adding or eliminating billable elements.

The increase in security in the client company computer system is based, among other things, on the validation of each one of the users in the system, so that it is possible to control who, when and how a user is connected. On the other hand, it adds a value added service based on the implantation of an antivirus in the entire system, which is duly updated.

As regards productivity, the personalization and organization of the work environment for each user increases the productivity thereof and facilitates different operations being carried out.

Preferably, the client processing and control unit stores all the information generated by it and by at least one client device in its data storage means and resends it using asynchronous processing systems to the central processing and control unit for it to be validated and stored.

This increases security against possible information loss in the system, both due to the duplicity of the information, and the availability of that information in different, independent dispositions.

Thus, in the case of any incident such as a fire or a flood, for example, in the client company, in no way is the information stored in the application service provider affected. To solve the problem, it is only necessary to replace the client processing and control unit arranged in the client company, for which reason system recovery is quick, efficient and inexpensive, both financially and as regards time spent.

The central processing and control unit records all the actions that have occurred in the system.

In this way, if the central processing and control unit forms part of an application service provider, said provider can know the services and applications used by the client company, as well as the amount of time they are used, to be able to issue it a bill. All this information is validated and stored for its later use by the application service provider, by the franchises or agents and by the client company.

Furthermore, as the application service provider always receives the actions carried out, it can control any fault that appears in the system, whether on a configurative level, hardware or of the integrated applications or services, and solve it remotely.

Alternatively, said central processing and control unit can also function, temporarily or permanently, as a client processing and control unit, depending on the case.

The central processing and control unit comprises a second client application that is run on said central processing and control unit.

Said client application is based, among other things, on the complete control of the system, ensuring data confidentiality and security. The human-machine interface associated to the second client application is similar to the human-machine interface of the first client application, centering, above all, on functions such as use control, access management, service billing, the generation of reports and statistics, or application maintenance. It also includes all the technical support utilities.

Also preferably, the system comprises at least one secondary processing and control unit connected to the central processing and control unit and to the client processing and control unit, whose secondary processing and control unit stores all the information generated by it and by the client processing and control unit and resends it to the central processing and control unit for it to be validated and stored.

Likewise, the secondary processing and control unit acts, among other things, as another storage element for information of the system elements dependent on said unit. Furthermore, the secondary processing and control unit can retake work away from the central processing and control unit as regards, e.g. user validation or the validation of information generated in the system. Said taking away of work may be due to the appearance of franchises or agents in charge of the management and maintenance, both as regards computing and support, of its client companies.

The secondary processing and control unit is also a computer.

Said secondary processing and control unit comprises a third client application which is run on said secondary processing and control unit.

Said third client application is based, among other things, on the complete control of the client processing and control unit, ensuring data confidentiality and security. The human-machine interface associated to the third client application is very similar to the human-machine interfaces of the first and second client applications.

Advantageously, the connection means between the client processing and control unit and the client device are a native IP interface, and more specifically, a standard Ethernet interface.

Said characteristic permits the connection of the client processing and control unit, provided by the application service provider, to the client company computer network using the same protocol used by the network, i.e. the client processing and control unit becomes another element of the client company computer network. This permits making use if the technical characteristics of a network, such as easy access between network elements or high-speed access between said elements, achieving access and running speeds for applications and services hitherto unknown in the current systems for the integration of applications and services.

Altematively, the connection means between the client processing and control unit and the client device are based on Internet broadband access technologies.

Said technologies are mainly used by mobile users of the client company. When a user is not in the client company, he/she should connect to the client processing and control unit by Internet to be able to validate him/herself as a user in the system, with the intention of obtaining all its documentary information as well as accessing the applications and services accessible to said validated user in said client processing and control unit.

Preferably, the information is transferred between the different system elements in native *XML.*

*XML* is the standard information exchange format due to its great versatility. The fact that it is a format purely composed of text (it does not include binary information), makes it completely compatible with all the computer environments, regardless of the development systems. At present it has become the format par *excellence* of Internet transmissions.

Also advantageously, the system uses compression and encryption systems such as 512-bit SSL type.

One of the most secure systems on the market is achieved with the 512-bit *SSL* type encryption, guaranteeing the confidentiality of all the information. In this way, if any unauthorized user has access to a user's system files it will be impossible for him/her to access the information contained as they are encrypted, so that the document information is absolutely confidential. Furthermore, all information transmissions, regardless of the type and format of data contained, are also encrypted in real time before making the communication.

According to a characteristic of the invention, at least one client device is a set of computers interconnected to form a network.

Normally, any client company, however small, has a computer system whose computers are connected forming a network. Said arrangement greatly facilitates the presence and the connection greatly facilitates the presence and the connection greatly facilitates the presence and the connection of the client processing and control unit in any kind of client company, for which reason the system for the integration of applications and services is not limited by the infrastructure of any computer system, even through it is formed by a single computer.

According to another important characteristic of the invention, the user is validated in the system by inserting a *USB* key in the client device so that the system permits him/her to be validated with his/her identification parameters.

The *USB* key is based principally on mass storage, such as a hard disk, which has a unique serial number assigned. In this way, associating said unique serial number to a usemame and password, etc., one obtains a very secure and efficient user validation system. There are cases wherein it is possible to request the client company's name as another validation parameter, which further increases the security in the user validation.

The system uses *CORBA* technology more specifically to make the different connections and information transmissions between the different elements that comprise the system, and to request services.

The use of this technology guarantees the construction of an environment which is totally scalable and independent from the platform used, being possible to expand the different applications in the future to LINUX/UNIX environments without integration problems in the system. Likewise, this technology, as it is used worldwide, benefits from infinite documentation, tests and installations in production.

The system comprises a distributed cache *multithread* system which has a transmitted documents processing module, a service processing module and a request processing module.

Said distributed cache *multithread* system guarantees, in all cases where the transmission of information between the system elements is necessary, that the least information possible to unequivocally obtain said information is transmitted. For this, the cache system takes into account the differences between the files, so that it only transmits said differences.

The transmitted documents processing module is responsible for partially or totally storing the latest user file transfers in temporary areas of the memory and disk. In this way, it is possible to make binary comparisons between the different documents transmitted, and only send the parts that have been modified, thus managing to occupy the communication lines as little as possible, at the same time as considerably reducing the transfer time.

The service processing module is responsible for storing the last service requests in temporary areas of the memory. Said process permits processing a multitude of concurrent services, without the need to re-evaluate each one of the services requested.

The request processing module guarantees that the multitude of internal requests in the system of the invention between the different elements thereof is performed in as short a time as possible, with the maximum efficiency.

The union between the cache system disclosed and said compression system, makes it possible to obtain high information transmission efficiency levels, producing an unbeatable communication system for large amounts of information.

Also advantageously, the system comprises a plurality of parallel *pipelines.*

In this way, if a system services usage peak is found, all the requests are processed in the most optimal way possible without the possibility of information loss. In any case, higher priority is given to all the integrity critical systems, never endangering the stability of the information transferred.

The system comprises a backup system for the information contained in all the system elements, whose backup system has a conventional backup module and a redundant system module.

Said backup system stores all the information contained in the elements that form the system of the invention. The backup system has been designed to guarantee system restoration in as short a time as possible, maintaining all the information prior to the system crash.

The conventional backup module uses standard applications that make backups of all the information contained in each one of the elements that form the system on tapes or other information storage devices. Said module does not make the backups in real time due to the large quantity of information to be stored, delegating them, for example, to night processes.

The redundant module is formed by internal processes that make redundant copies in real time of all the critical information of the users' security and storage systems.

There are also controls and indicators of the correct functioning of the backup system, automatically informing of possible mistakes or faults.

Said backups are stored encrypted and are inaccessible to any unauthorized user.

As has been previously stated, the encryption of the backups is also based on the 512-bit SSL type.

Therefore, the backup system can be considered as a value added service of the application service provider to the client company.

The system comprises a system to automatically update the applications and services integrated in the system, informing said applications and services of its status.

The update system automatically updates all the applications integrated in the system without user intervention, guaranteeing that all the applications are of the latest versions and completely updated.

Said applications and services update system comprises an internal update module and an external update module.

The internal update module has specific, configurable configurations of the actions to be performed in the remote updating of the applications, as well as a multitude of installation parameters. Each one of the applications is connected to the update system of the system. It informs, at all times, of the versions used in each one of the applications, so that the system can detect previous versions and update them remotely.

The external update module supervises all those applications that are not totally integrated in the system of the invention. In this way, it is capable of remotely updating said applications, but it may need some final intervention to complete said updates.

Said update system can also be considered as a value added service of the application service provider to the client company.

Preferably, the system comprises distributed databases, wherein all the information necessary for the correct functioning of the system is stored.

All the applications that form the system for the integration of applications and services, object of the invention, are designed to optimally work with distributed databases, without resorting to replication systems, or expensive parallel server systems, guaranteeing the integration of information in all cases.

Said distributed databases use *CORBA* and *SOAP* technologies.

The use of these technologies permits transferring information between many servers, performing joint processes, without their being the requirement of replicating the information contained in the databases. This is achieved by dividing the information between several databases, so that a piece of information is only found in one server. The merging of the information from all the servers generates the entire documentary database.

Advantageously, the client applications comprise a system administration and control module.

In this way, the application service provider, or by default, a franchise or agent can control any billable action performed in the system. Likewise, the head of the client company can manage and control the system, performing actions such as assigning profiles to each user, registering or cancelling users, acquiring new applications or services licenses or cancelling them. Furthermore, among other things, it can control the use of each one of the applications or services acquired by the company, to check if it has a sufficient number of licenses, or can know the actions performed by any user from the company in the system.

According to another characteristic of the system of the invention, the first client application is an application that permits the user to access system applications and services through the human-machine interface displayed on the client device.

Said human-machine interface is performed in *Delphi* and not in *html,* which means greater design versatility, more adaptability to the requirements, and better appearance for the user, facilitating the integration of a user in the system.

Furthermore, said human-machine interface is that which achieves the final objective of the system which is that of integrating all the applications and services for a user.

For this, the human-machine interface comprises a strip system with strips which are vertically displaceable like blinds, to organize the applications and services integrated in the system, accessible to the validated user.

Said strip system with strips which are vertically displaceable like blinds is conceived as a system which facilitates user productivity, increasing his/her organizational capacity and making the system of the invention feel very usable.

The human-machine interface also comprises a virtual desktop structured in a user only area, an area accessible to all authorized system users and an area accessible to users external to the system.

In this way, the user has an area where he/she can personally organize all the documents he/she uses, an area where the user can place documents so that they can be accessible to the users of his/her company, generating a quick, reliable, secure system of information exchange in the company, and an area where he/she can place documents so that they are accessible to the users of the company and, mainly, to the customers or suppliers of said company, meaning that an efficient information exchange system is generated, but in this case external.

Continuous backups are made of the documents placed in each one of the areas and it permits instant, automatic recovery of the last three versions of each document.

According to another characteristic of the invention, the human-machine interface comprises an intercommunication bar wherein communication utilities accessible to the validated user are found.

The access to each one of said communication utilities or applications is totally configurable according to the user profile, being, at all times, accessible to the user. A luminous signal indicates which utilities or applications have an element open.

Furthermore, the first client application comprises a real-time videoconference service internal to the system and/or an instant messenger service internal to the system.

Said utilities or applications also appear on the intercommunication bar and are totally configurable. Both the instant messenger service and the videoconference service permit interconnection of the users of a company through conversations, documents, audio and/or video, simultaneously and in a group.

Also advantageously, the strip system with strips which are vertically displaceable like blinds comprises at least one of the following: a strip of applications accessible to the user, a strip of services accessible to the user, an Internet browsing strip, an integrated application and service catalogue strip, an application, service and user control strip, and a support strip.

Normally, the applications strip comprises sectorial applications, horizontal applications and productivity applications.

Each one of the strips of the system of strips which are vertically displaceable like blinds comprises a comprises a first button that has a left area to completely open and close the strip, a central area to completely open, select and display the strip in the foreground and a right area to drag and move the strip to the vertical position desired by the user.

The functions of their areas vary depending on the position of the strip associated to the first button whereon the user acts. Thus, if the strip is closed, clicking on the left area or the central area of the first button means the total opening of the strip, whilst with the right area, one can open the strip to the position required by the user. If the strip is totally open, clicking on the left area of the first button means the closing of the strip, clicking on the central area means the selection and the display of the strip in the foreground, whilst clicking on the right area means the partial opening of the strip. If the strip partially opens, clicking on the left area of the first button means the complete closing of the strip, clicking on the central area means the complete opening of the strip, whilst clicking on the right area means greater or lesser opening of the strip.

Furthermore, each one of the strips, when open, comprises a second button which has a left area to open the available or running options bar, and a right area to select and display the strip in the foreground.

According to another aspect of the invention, a human-machine interface associated to a client application which is run on a client device by a user previously validated in a system for the integration of applications and services through a client processing and control unit, wherein a plurality of users are validated, is characterized in that it comprises a virtual desktop which has a first area of personal access of the user, a second area of common access to all the authorized system users, and a third area for access to authorized users external to the system.

The human-machine interface also comprises a strip system with strips which are vertically displaceable like blinds to organize all the applications and services accessible to the validated user, and an intercommunication bar wherein communication utilities accessible to the user are found.

### Brief description of the drawings

To better understand the aforementioned, a set of drawings is attached wherein, diagrammatically and by way of non-limiting example, a case of practical embodiment is represented.

In the drawings:
figure 1 is a block diagram of the system for the integration of applications and services, object of the invention;
figure 2 is a block diagram of the system of figure 1 wherein a mobile user intervenes;
figure 3 is a diagram of the main window of the human-machine interface associated to the first client application of a client device; and
figure 4 is a diagram of the main window of the human-machine interface of figure 3, wherein one of the strips of the strip system appears open.

### Description of preferred embodiments

Hereunder, preferred embodiments of the invention will be described wherein the central processing and control unit is a computer referred to as a central server, the secondary processing and control unit is a computer referred to as a secondary server, the client processing and control unit is a computer referred to as a client server, the client devices are an Ethernet network of personal computers or a laptop, and the connection means are a standard Ethernet interface.

It should also be highlighted that the preferred embodiments described are based on the existence of an application service provider, a franchise or agent, and a client company associated to said franchise or agent, although the structure of the system, object of the invention, may be very varied. For example, there may exist a plurality of franchises or agents associated to a single application service provider, and each one of the plurality of franchises or agents have a plurality of associated client companies.

The client company users will be referred to as end users.

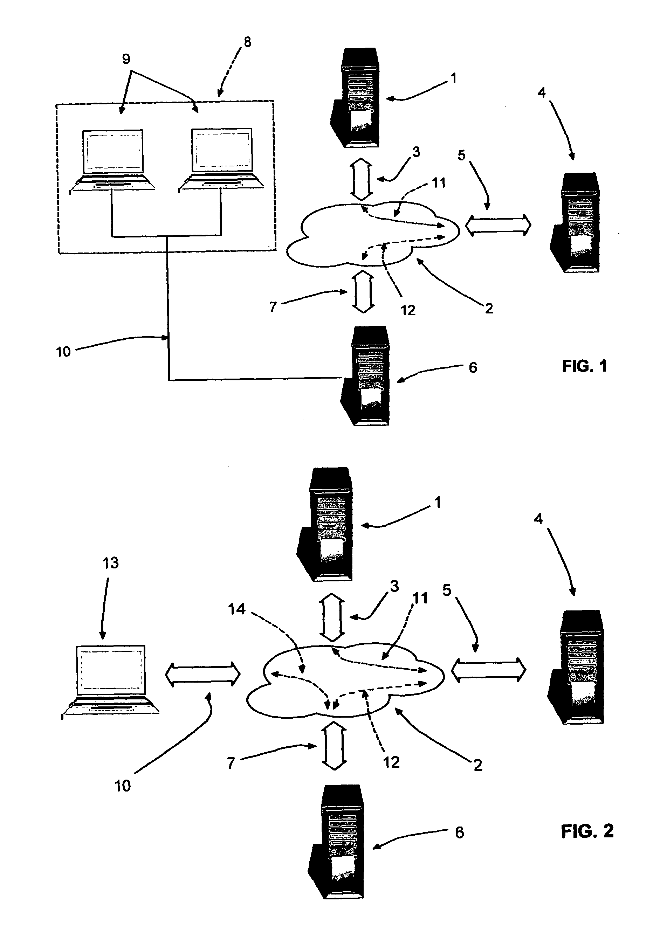

In figure 1 it can be seen that the system for the integration of applications and services comprises a central server 1, arranged in the installations of the application service provider, connected to Internet 2 by broadband access 3, such as an ADSL, a secondary server 4, arranged in the installations of the franchise or agent, also connected to Internet 2 by an ADSL line 5, and a client server 6, arranged in the installations of the client company, connected to Internet 2 by a cable 7 and connected to an Ethernet network 8 of personal computers 9 of the client company, by a standard Ethernet interface 10.

Figure 1 also shows a virtual connection 11 between the central server 1 and the secondary server 4 through Internet 2, and a virtual connection 12 between the secondary server 4 and the client server 6, also through Internet 2, so that, in the case of the existence of the franchise or agent, the client server 6 can never be directly connected to the central server 1, but it should do so through the secondary server 4 of the franchise or agent.

Figure 2 shows a block diagram wherein the client company end user is a mobile user who is remotely connected to the system by Internet 2.

In this case, the mobile end user should connect a computer 13, e.g. a laptop, to the client server 6 through Internet 2, for which reason, in this case, the connection means 10 of the computer 13 to the client server 6 are based on broadband technology, more specifically, on an ADSL line, and not on an Ethernet interface, as was the case in figure 1.

As can also be seen in figure 2, a virtual connection 14 between the computer 13 of the mobile user and the client server 6 arranged in the installations of the client company is represented. In this way, the mobile user, through the computer 13, can only interact with the client server 6, without the possibility of it interacting directly on the secondary server 4 or the central server 1.

It is clear in figures 1 and 2, that there exists a hiercherization of the system as regards the servers that form it. Thus, for example, the client server 6 sends the information it stores to the secondary server 4, whose secondary server sends the information it stores, amongst which is included the information it sends to the client server 6, to the central server 1, which also stores it. In this way, the information (documents, configurations, etc.) of the system end users is stored in the client server 6, in the secondary server 4, and in the central server 1, attaining maximum security of not losing information due to a possible system crash.

It is for this reason that each one of servers 1, 4, 6 should be connected to the system. This server interconnection permits complete control of all the actions made by each one of them, as well as the remote configuration thereof, guaranteeing, in this way, the most optimal response to any system fault.

One of the main requirements of the system is complete control of the actions performed in each one of servers 1, 4, 6, for which reason it is necessary to record each one of the actions performed therein.

The system of the invention, in addition to that shown in figures 1 and 2, requires a series of subsystems for its correct functioning. These subsystems are the following:
- A subsystem to validate the users in the system.
- A subsystem to transmit the information between the different servers that form the system.
- A system information encryption subsystem.
- A system file subsystem.
- A distributed cache *multithread* subsystem.
- A system information backup subsystem.
- A system application, service and module update subsystem.
- A system information distributed database system.
- A subsystem comprisisng a client application for the central server 1, a client application for the secondary server 4, and a client application for each computer 9 that forms the network 8, or for the laptop 13.

These subsystems are fundamental to be able to achieve the object of the invention, for which reason each one of them will be described.

### Subsystem to validate the users in the system.

Every user who wants to access the system of the invention should previously be validated in said system. For this, and with the intention of further improving system security, a unique unequivocal user identification policy is established.

Said user identification policy requires each user to use a *USB* key, in addition to a username, a password, *IP* address of the server 1, 4 and 6 whereon he/she will be validated and the name of the company to which he/she belongs. It is also possible to add further parameters with the intention of increasing, if that were possible, system security.

The *USB* key for user identification and authentication is based on a *USB* device with flash memory, which can store the client application, and which has an assigned number. Said number is a key associated to said mass storage (hard disk or *USB* key), said code being unique. In this way, the assignation of the user identification parameters to this unique number gives rise to an unequivocal identification thereof.

Thus, the user, to identify him/herself in the system, should insert the key in the computer *USB* port 9; 13, regardless of access by user and password, since his/her authentication in the system would not be viable otherwise, and subsequently enter said identification parameters. When the user inserts the key in the computer *USB* port 9; 13 a window to enter the user identification data automatically appears on the screen of said computer. Once the data has been entered, a file is generated with the unique number of the *USB* key and the user identification. Said file becomes an *XML* document through the information transfer subsystem and is compressed and encrypted by the 512-bit SSL encryption subsystem. Once these phases have been performed, the file is transferred to the secondary server 4 to be validated and subsequently stored. If the validation is correct, the secondary server 4 permits the client application to run on the client server 6, so that the user can access all the applications and services assigned to him/her. Later, the secondary server 4 resends the compressed, encrypted *XML* document to the central server 1, which also stores and validates it.

To further increase system security, all fraudulent attempts to access thereto are recorded (source of access, *USB* key code, date, time, etc.), blocking the user account after three failed attempts, preventing access to any user information or process in question. Only the user profile defined as administrator can unblock said account.

Furthermore, as previously mentioned, the system automatically encrypts and compresses the file generated before sending it to the server 1; 4, so that authentication in the system is absolutely secure.

### Subsystem to transmit information between the different servers that form the system.

One of the main characteristics of the system is the continuous transmission of information between the elements that comprise it, e.g. the file with said user identification data or the documents generated by the users from the applications or services integrated in the system. Thus, the client server 6 continuously transfers information to the secondary server 4, and the secondary server 4 continuously transmits information to the central server 1. Said information transmission is essential for information not to be lost in the system whether as regards end user documents or information internal to the system.

Whatever the system's physical structure, e.g. figure 1 or figure 2, the information (end user documents, configurations, user access, etc.) is transferred between the client server 6 and the secondary server 4, and the secondary server 4 and the central server 1 is *XML (Extensible Markup Language)* documents.

*XML* is a standard information exchange format purely comprised of text, i.e. it does not include binary information, which makes it completely compatible with all existing computer environments, regardless of the development systems.

At present, it is also the format *par excellence* of Internet transmissions 2 and in the new standard format in all Microsoft *.NET* platforms.

The use of *.NET* technologies is due to the fact that the client applications of the servers 1, 4, 6 run on Microsoft *Windows*. Although the incorporation in the market of said technologies has been slow, the design and implantation of the modules that comprise the system are compatible with the new windows *Windows* trends, as well as the advantages offered by *.NET* products.

The system uses *.NET* technologies such as the Microsoft *Windows Server .NET*, the *SQL Server.NET* and access to the *ADO.NET* databases.

Due to this, *XML* is used in the system of the invention as an information exchange system, based on variable and not strict element, so that it is possible to store any type of information in said format.

It should be highlighted that the transfer of *XML* documents is much slower in comparison with the transfer of binary files due to the difference in size of the files compared. Furthermore, *XML* does not support any type of encryption of the information integrated in the documents, for which reason it is necessary to perform a subsequent encryption process on the documents generated, so that the system of the invention is totally secure.

### System information encryption subsystem.

To solve the encryption problems stated in the previous point, in addition to the compression of said *XML* documents, the implementation of the transfer of all the information on *XML* incorporates compression and real-time 512-bit SSL encryption subsystems.

Said *SSL* encryption subsystem is one of those currently most secure, with which the confidentiality of all the information can be guaranteed. Furthermore, due to the combination of the encryption subsystems with the compression subsystems, no increase in size of the secure final documents obtained occurs.

The use of said information encryption subsystems stored in any document is due to the risk of unauthorized user access to said documents, especially for authorized user documents.

Therefore, taking the impossibility of avoiding any probability of obtaining information fraudulently as a fact, the security objectives of the system of the invention deal with information encryption systems.

In this way, if any unauthorized user has access to the files of an authorized user, he/she cannot access the information contained since said files are encrypted, making the document information absolutely confidential.

All information transmissions performed in the system, regardless of the type and format of the data contained, are encrypted in real time before making the communication. The fact of encrypting information in real time implies that non-encoded original files do not exist, rejecting the possibility of any non-permitted access.

On the other hand, it is not possible to encrypt the information generated by the vertical applications integrated in the system of the invention in real time. To solve said problem, a virtual access system is generated, wherein any information which accesses the encryption gateway, regardless of the propriety of the application, is stored with the desired security. Due to the fact that this process generates insecure temporary files, the virtual access system securely eliminates any temporary file that may have been generated in the process, also guaranteeing, in this case, the confidentiality of all information generated.

### System file subsystem

The system also has a specific file subsystem. Said file subsystem permits transmitting any compressed, encrypted document on the system of the invention. In this way, all transmissions of private documents, as well as temporary files, *XML* documents, etc., is performed with maximum security, efficiency and confidentiality. Furthermore, the file subsystem is independent from the operative system used.

All the client applications, as well as the integrated applications and services, or the system modules, share a standard structural system, always forming part of a larger *XML* document.

Consequently, all the files, whether binary or not, can be interpreted with any standard *XML* parser, with said security limitations in the encryption.

Likewise, the file system makes the MIME conversion in real time of all the binary files and the generation of the encrypted, compressed *XML* documents.

### Distributed cache multithread system.

Due to system requirements, a distributed cache *multithread* system has also been developed wherein the file differences are taken into account, including the binary ones, so that only the differences between both are transmitted. In this way, it guarantees, in all cases where file transmission is necessary, that the least possible information to unequivocally obtain them is transferred.

The cache system has been developed taking into account the possibilities of external modification or misuse of the stored documents, guaranteeing the integrity of all documents transmitted.

All user requests and elements that form the system are initially processed by the cache system.

The cache system developed has three clearly differentiated modules:
- A document processing module in charge of totally or partially storing the latest user file transfers in temporary areas of memory and disk of the servers 1, 4, 6. In this way it is possible to make binary comparisons of the documents transmitted and send only the parts that have been modified, managing, in this way, to occupy the least possible communication lines 3, 5, 7, at the same time as reducing the transfer time.
- A service processing module in charge of storing the latest service process requests, such as lists, statistics or definitions, or requests for internal system services in temporary areas of the servers 1, 4, 6. This process module permits processing a multitude of concurrent services, without having to re-evaluate each one of the services requested.
- A module to process requests between the different system elements. In this way, it guarantees that the request for services, the request for file transfers and internal system requests are performed in the shortest possible time, always guaranteeing maximum efficiency.

The union between the compression system and the cache system permits obtaining high efficiency information transmission levels, achieving an unbeatable communication system for large volumes of information.

The system has been developed with the incorporation of several parallel *pipelines* so that, if a service usage peak is found, all requests are processed in the most optimal manner possible and without possibilities of information loss. In any case, the system has been designed to give greatest priority to integrity critical systems, never endangering the stability of the transmitted information.

### System information backup subsystem.

Another characteristic of the system to be highlighted as regards security is making an appropriate backup subsystem. Thus, all the information contained in the servers 1, 4, 6 that form part of the system of the invention is maintained in backups in case of critical failures.

Said backup subsystem has been created to guarantee the restoration of the servers 1, 4, 6 that form part of the system in the least possible time and to maintain all information prior to the loss. Furthermore, several backup subsystems have been designed for each one of the problems associated to the system of the invention. All the backup subsystems have been considered as one of the most critical points of the system, constructing them as real prevention systems, guaranteeing the restoration of the entire system if total failure occurs.

Due to this, the backup subsystems are divided in two groups: conventional backup systems and redundant systems of the system. In either of those two cases, the backups are stored compressed and encrypted using the encryption subsystem, so that they are inaccessible to any unauthorized user.

The backup subsystems automatically have indicators and controls of their correct functioning, automatically entering any failure produced in any of the backup subsystems.

Conventional backup subsystems are based on applications that make backups of all the information contained in the central server 1, in the secondary server 4 and in the client server 6, on security tapes or any other device in accordance with the requirements. Due to the large quantity of information they have to store, said subsystems are not performed in real time, instead said services are normally delegated to night processes.

The redundant subsystems of the system of the invention are formed by internal processes that make redundant copies in real time of all the critical information of the user security and storage subsystems. In this way, combining the two security subsystems defined, it is possible to totally guarantee, in case of a total information loss, the regeneration of the entire system.

### System application, service and module update subsystem.

Another characteristic of the system to be highlighted relates to the update subsystems implemented. All the integrated applications can automatically be updated from said update subsystems without any user intervention guaranteeing, in this way, that all the applications are always in their latest version.

For this reason, one can differentiate two update subsystems depending on the type of application to be updated:
- Internal update systems. They are used in the internal modules of the applications necessary for all the system to function and communicate correctly, in Front-End applications and, in general, in all those customized applications developed and in 100% integrated applications.
- External update systems. They are used for those applications that are not entirely integrated in the system, as may be the case of some vertical applications, or even applications that are not integrated in the system, as may be the case of particular user applications.

The internal update systems form part of the nucleus of the central server 1 of the system. Each one of the applications is connected to the update services of the entire system. The central service 1 is informed, at all times, of the versions of each one of the applications, so that the subsystem can detect previous versions and update them remotely.

Said internal update subsystems have specific, configurable configurations of the actions to be performed in the remote updating of the applications, as well as a multitude of application installation parameters.

All this data is contrasted with the user accounts so that, if a determined predefined condition is not complied with, it can refuse to update it.

All the applications that have not been updated are recorded in the system, so that it automatically informs the central server 1 of the reasons, to be able to perform a possible intervention as soon as possible.

The external update systems can remotely update the applications, but it may need the final intervention to complete said updating.

The central server 1 has remote control applications for all system elements, so that it may remotely perform any maintenance task. Therefore, although a final intervention may be necessary in the updating, this can be done remotely from said central server 1.

Each one of the applications, either natively or through the external updating systems, can inform of its complete status, including its version, installation date or size. All this information is continually processed by the corresponding services in the central server 1. If any correctable fault is automatically detected, the subsystem starts automatically, but in accordance with predefined behaviour parameters, the actions necessary for the correct functioning of the whole system. Likewise, all the actions of this type are reported to the central server 1 through automatic subsystems, such as e-mail or status list, which can be consulted from any system element 1, 4, 9; 13.

### System information distributed database subsystem.

One of the most important characteristics of the system of the invention is the capacity to receive information constantly from all the elements 1, 4, 6 connected to said system, one of the main modules of the system nucleus being the subsystem of information exchange between the multitude of elements 1, 4, 6 that form the system.

The applications developed are capable of constantly sending information from any of the actions performed by the user, in any part of the system. In this way, it is possible to detect faults in the applications and even undue or unauthorized use of any of said applications by the users. Likewise, it is possible to receive any type of information relating to the total installation of any system element, even if the element is operative or switched off.

All information necessary for the correct functioning of the system, to which references have been made throughout the description, is stored in distributed databases.

The applications that form the system are designed to perform said tasks without resorting to large replication systems, or expensive parallel server systems, guaranteeing, in this way, information integration in all cases.

For this, Microsoft *SQL SERVER* databases are used, together with own applications that use *CORBA* technology. Said *CORBA* and *SOAP* technology permits transmitting information between a multitude of servers performing joint processes, without the necessity to replicate the information contained in the database. This is achieved by dividing the information in several databases, so that a piece of information is only found in one server. The combination of the information in all the servers that form the distributed network generates the entire documentary database.

The applications that comprise the system of the invention distribute all information between several servers, guaranteeing maximum efficiency in all the documentary processes surpassing the limits of replication systems.

Furthermore, due to the fact that the system is absolutely scalable as regards the unlimited amount of computers in the distributed system, the system can grow without limits in accordance with the necessities thereof. Due to this, the system performance increases proportionally to the number of servers it incorporates, being a completely time-scalable system. We should take into account that increasing the server system does not represent an additional cost to that of the server as no special hardware or software is used different to that which it already has.

### Subsystem comprising a client application for each computer 9 that forms the network 8, or for the laptop 13.

The application service provider, the franchise or agent, and the client company end user basically have the same client application, but each one of them centered on their end user.

Thus, the client application of the application service provider permits complete control of the system of the invention, ensuring the confidentiality and security of the data of all the client companies and of the franchise or agent. Said application performs tasks such as the control, at all times, of system user access to all applications and services, obtaining, at all times, the reports of service use, control of the different versions of the applications and services that the end user has, the billing of all the services and applications contracted, guaranteeing the security and confidentiality of all the information stored in the system by various tasks of backup systems or antivirus systems, or ensuring the connectivity of the client company end user and the franchise or agent.

The franchise or agent client application should guarantee the confidentiality and security of all client company data. Furthermore, it should be possible to perform tasks such as end user control and management, billing the client company, or generating reports and statistics.

Each system user has a client application that permits him/her to access all system capacities. Said client application, which is run on the user's computer 9; 13, permits the transmission of all the information and all the actions performed by the users to the client server 6. At the same time, said information will be scaled through the secondary server 4, until reaching the central server 1. This interconnection system permits the end users to enjoy a high-speed connection to the client server 6, delegating all the asynchronous transmission control processes to the client server 6.

The client server 6 has a cache subsystem to maintain temporary copies for immediate access to the different transmissions received and sent to each one of the users. This guarantees maximum efficiency in resending information as well as handling all information received.

If it is were not possible to make said asynchronous transmissions from the client server 6 to the secondary server 4, all the outstanding processes remain in process stacks waiting for system reconnection, .

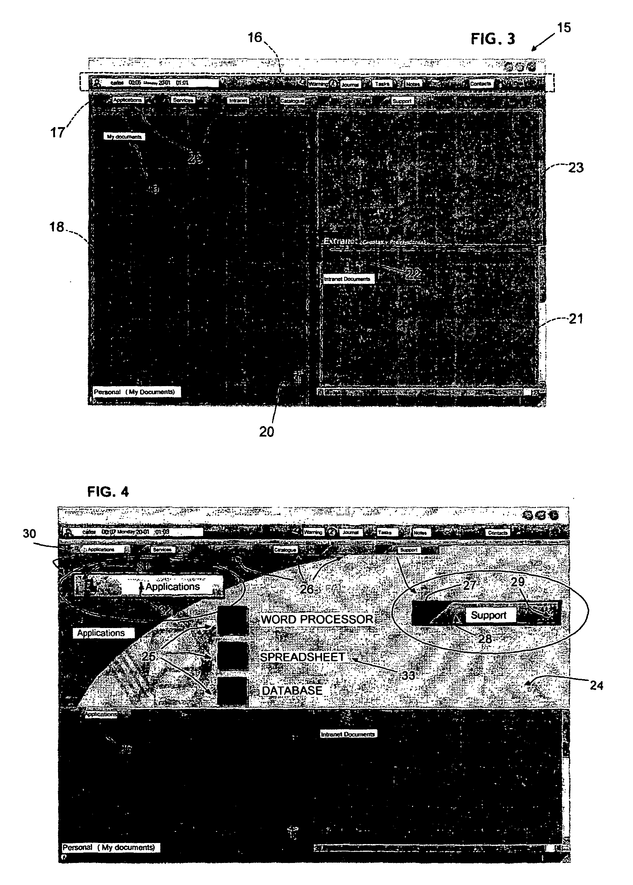

Said client application generates a human-machine interface 15, as can be seen in figure 3.

Said human-machine interface 15 comprises a window which can be personalized by the user and by the administrator of the system of the invention, which can prevent the user, at any time, from access to the different applications and services integrated in said system.

The window 15 has an intercommunication bar 16, a desktop and a work platform 17.

The intercommunication bar 16 comprises all the communication utilities accessible to the user, such as tasks, notes, warnings, contacts, Internet access, e-mail or agenda. Access to each one of said applications is configurable depending on the user profile and they are accessible at all times.

The desktop is divided in three different areas which are logically and visually differentiated:
- A personal desktop 18 where a series of functionalities are implemented which permit efficiently managing the different elements contained in said personal desktop. If the user has a large amount of elements on the desktop, there is the possibility of dragging said elements inside the virtual folders 19, or viewing the list of elements contained, so that the localization of a desired element is simple. The elements can be e.g. documents of the user generated by applications such as text processing elements, databases, presentations or spreadsheets. Said elements are accessible to the user and to others who have permits assigned for this, in a completely confidential manner. It ensures the storage of elements through said backup subsystems, and it gives the possibility of recovering up to the three latest versions of an element through a waste basket 20.
- An Intranet desktop 21 wherein information is shared between the system users. The option to create said information, e.g. user documents, is restricted, so that the user should create the information directly on his/her personal desktop and subsequently transfer it to the Intranet desktop. Said desktop is completely configurable, so that each system user only has access to certain folders 22 or documents, thus ensuring confidentiality. Furthermore, through the Intranet desktop 21, the exchange of documentation between the different system users is permitted quickly, reliably and securely.
- An Extranet desktop 23 which shows information, e.g. documents, to a group of users, internal and external to the system, who have permits assigned for this. Said desktop 23 permits the exchange of documentation between a user internal to the system and users external thereto. When a system user places a document on said Extranet desktop 23, a Web page is automatically updated, to which the users internal and external to the system configured for this have access by a code. Said users have automatic access to the document. Likewise, any user validated for this can place information on the Web page, whose information will be accessible by the internal system user through the Extranet desktop 25. In this way, a quick, secure information exchange system is achieved.

As can be seen in figure 4, the work platform 17 comprises a pull strip system 17 with strips 24 which are vertically displaceable like blinds, to organize all the applications and services 25 integrated in the system of the invention.

In figures 3 and 4, it can be observed how each strip has a control button 26 of said strip 24, which is divided in a left area 27 to completely open the strip 24, a central area 28 to completely open and select the strip, and a right area 29 to drag the strip to the position desired by the user.

The functions of their areas vary depending on the position of the strip 24 associated to the control button 26 whereon the user interacts. Thus, if the strip 24 is closed, operating the left area 27 or the central area 28 of the control button 26 means completely opening the strip 24, whilst, with the right area 29, it is possible to open the strip to the position desired by the user. If the strip is completely open, clicking on the left area 27 of the control button 26 means the strip 24 closes, clicking on the central area 28 means the means the selection and display of the strip 24 in the foreground, whilst clicking on the right area 29 means the partial opening of the strip 24. If the strip 24 is partially opened, clicking on the left area 27 of the control button 26 means the strip 24 completely closes, clicking on the central area 28 means the strip completely opens, whilst clicking on the right area 29 means a greater or lesser opening of the strip 24.

The opening of any strip 24 (figure 4) means the appearance of a new button 30 which has a left area 31 for the appearance of an available or running options menu, and a right area 32 to show the strip 24 in the foreground.

Furthermore, each strip 24 also has a panel 33 which may comprise links to applications 25, services or to other system modules. The content of said panel 33 is not destroyed or closed if a strip 24 is closed, instead, it is kept active until the user decides to re-access it.

According to a preferred embodiment of the invention, the work platform has a strip 24 of applications accessible to the user, a strip of services accessible to the user, an application, service and user control strip, an Internet browser strip, a catalogue strip of the applications and services which can be used by the user and a support strip.

The applications strip 24 comprises those applications 25 both of productivity and those considered external. Said applications can be grouped in sectorial applications, horizontal applications and productivity applications.

The services strip comprises those generic tools necessary so that the user can effectively perform his/her activity.

The catalogue strip permits authorized users to assign new applications or services to other system users to themselves, with their respective licenses.

The control strip is only accessible to authorized users. Therein, it is possible to consult all the operative information of the system and manage its tools. Reports can be obtained on the use and status of the system, comparative statistics, consumption information and the maintenance of user access to the system applications, services or modules, the registration and cancellation of each one of the service applications, services or modules, and of the general and user personalization tools, can be performed. Within the maintenance of system applications, services and modules, the system applications, services and modules can be registered and cancelled for each user. In user maintenance, one can configure what applications each employee has access to and what that access is (no access, consult only or total access).

In the support strip, we find all the tools necessary to aid the users, so that specialized computer experts are not necessary for the maintenance and installation of the system, permitting a self-sufficient work environment.

Despite the fact that a specific embodiment of the present invention has been described and represented, it is evident that someone skilled in the art could introduce variants and modifications, or replace details for other technically equivalent ones, without departing from the field of protection defined in the attached claims.

For example, the system of the invention could also include *Thin Client* accesses, recording said accesses and the protection services defined detecting possible accesses by non-registered users.

On the other hand, the strip system 17 with strips 24 which are vertically displaceable like blinds, can have other strips. The aforementioned are only by way of example and are at no time limiting.

## Claims

1. System for the integration of applications and services comprising at least one central processing and control unit (1) remotely connected to at least one client device (9; 13) whereon at least one user validated in the system interacts through the client device, **characterized in that** it also comprises at least one client processing and control unit (6) arranged between the central processing and control unit (1) and the client device (9; 13), being remotely connected to the central processing and control unit (1) and being connected to the client device by connection means (10), whose client processing and control unit (6) comprises data storage means which store applications and services to be run on the client device (9; 13) by the user, on interacting with a human-machine interface (15) associated to a first client application which is run on the client device (9; 13), viewed by the user on the client device after the validation of the user in the system.

2. System according to claim 1, **characterized in that** the client processing and control unit (6) stores all the information generated by it and by at least one client device (9; 13) in its data storage means and it resends it using asynchronous processing systems to the central processing and control unit (1), for it to be validated and stored.

3. System according to any of the preceding claims, **characterized in that** the central processing and control unit (1) records all the actions which take place in the system.

4. System according to any of the preceding claims, **characterized in that** the central processing and control unit (1) comprises a second client application which is run on said central processing and control unit.

5. System according to any of the preceding claims, **characterized in that** it comprises at least one secondary processing and control unit (4) connected to the central processing and control unit (1) and to the client processing and control unit (6), whose secondary processing and control unit (4) stores all the information generated by it and by the client processing and control unit (6) and resends it to the central processing and control unit (1) for it to be validated and stored.

6. System according to claim 5, **characterized in that** the secondary processing and control unit (4) comprises a third client application which is run on said secondary processing and control unit.

7. System according to any of the preceding claims, **characterized in that** the connection means between the client processing and control unit (6) and the client device (9; 13) are a native IP interface (10), and more specifically, an standard Ethernet interface.

8. System according to any of claims 1 to 6, **characterized in that** the connection means (10) between the client processing and control unit (6) and the client device (9; 13) are based on broadband Internet (2) access technologies.

9. System according to any of the preceding claims, **characterized in that** the information is transferred between the different system elements (1, 4, 6) in native *XML.*

10. System according to any of the preceding claims, **characterized in that** it uses compression and encryption systems.

11. System according to claim 10, **characterized in that** the encryption system is 512-bit SSL type.

12. System according to any of the preceding claims, **characterized in that** at least one client device (9; 13) is a set of computers interconnected to form a network (8).

13. System according to any of the preceding claims, **characterized in that** the validation of the user in the system is performed by inserting a *USB* key in the client device (9; 13) so that the system permits him/her to be validated with his/her identification parameters.

14. System according to any of the preceding claims, **characterized in that** it uses *CORBA* technology, more specifically to perform the different connections and transmissions of information between the different elements (1, 4, 6) which comprise the system, and to request services.

15. System according to any of the preceding claims, **characterized in that** it comprises a distributed cache *multithread* system.

16. System according to claim 15, **characterized in that** the distributed cache *multithread* system comprises a module to process the transmitted documents, a service processing module and a request processing module.

17. System according to any of the preceding claims, **characterized in that** it comprises a plurality of parallel *pipelines.*

18. System according to any of the preceding claims, **characterized in that** it comprises a backup system for the information contained in all system elements (1, 4, 6), whose backup system has a conventional backup module and a redundant system module.

19. System according to claim 18, **characterized in that** the backups are stored encrypted and inaccessible to any unauthorized user.

20. System according to any of the preceding claims, **characterized in that** it comprises a system to automatically update the applications and services integrated in the system, reporting said applications and services of its status.

21. System according to claim 20, **characterized in that** the applications and services update system comprises an internal update module and an external update module.

22. System according to any of the preceding claims, **characterized in that** it comprises distributed databases, wherein all the information necessary for the correct functioning of the system is stored.

23. System according to claim 22, **characterized in that** the distributed databases use *CORBA* and *SOAP* technologies.

24. System according to any of the preceding claims, **characterized in that** the client applications comprise a system administration and control module.

25. System according to any of the preceding claims, **characterized in that** the first client application is an application that permits the user to access the system applications and services through the human-machine interface (15) displayed on the client device (9; 13).

26. System according to any of the preceding claims, **characterized in that** the human-machine interface (15) comprises a strip system (17) with strips (24) which are vertically displaceable like blinds to organize the applications and services integrated in the system accessible to the validated user.

27. System according to any of the preceding claims, **characterized in that** the human-machine interface (15) comprises a virtual desktop structured in a user only area (18), an area accessible to all authorized system users (21), and an area accessible to authorized users external to the system (23).

28. System according to any of the preceding claims, **characterized in that** the human-machine interface (15) comprises an intercommunication bar (16) wherein the communication utilities accessible to the validated user are located.

29. System according to any of the preceding claims, **characterized in that** the first client application comprises a real-time videoconference service internal to the system.

30. System according to any of the preceding claims, **characterized in that** the first client application comprises an instant messenger service internal to the system.

31. System according to any of claims 26 to 30, **characterized in that** the strip system (17) with strips (24) which are vertically displaceable like blinds comprises at least one of the following: a strip (24) of applications (25) accessible to the user, a strip of services accessible to the user, an Internet browser strip, an integrated applications and services catalogue strip, an application, service and user control strip, and a support strip.

32. System according to claim 31, **characterized in that** the applications (25) strip (24) comprises sectorial applications, horizontal applications and productivity applications.

33. System according to any of claims 26 to 32, **characterized in that** each one of the strips (24) of the system (17) of strips which are vertically displaceable like blinds comprises a first button (26) which has a left area (27) to completely open and close the strip (24), a central area (28) to completely open, select and display the strip in the foreground and a right area (29) to drag and move the strip to the vertical position desired by the user.

34. System according to any of claims 26 to 33, **characterized in that** each one of the strips (24), when open, comprises a second button (30) which has a left area (31) to open a menu of available or running options, and a right area (32) to select and display the strip (24) in the foreground.

35. Human-machine interface (15) associated to a client application which is run on a client device (9; 13) by a user who is previously validated in a system for the integration of applications and services through a client processing and control unit (6), wherein a plurality of users is validated, **characterized in that** it comprises a virtual desktop which has a first area (18) of personal access of the user, a second area (21) of access common to all the authorized system users, and a third area (23) of access to authorized users external to the system.

36. Human-machine interface (15) according to claim 35, **characterized in that** it comprises a strip system (17) with strips (24) which are vertically displaceable like blinds to organize all the applications and services accessible to the validated user.

37. Human-machine interface (15) according to either claims 35 or 36, **characterized in that** it comprises an intercommunication bar (16) wherein the communication utilities accessible to the user are located.
